# EUROPÄISCHE PATENTSCHRIFT

(11) **EP 4 320 718 B1**
(45) Veröffentlichungstag und Bekanntmachung des Hinweises auf die Patenterteilung: **15.01.2025**
(21) Anmeldenummer: 22722447.4
(22) Anmeldetag: 12.04.2022
(51) Int. Cl.: H02K 41/03, B65C 9/04, B67B 3/20, B65G 54/02

(54) **OBJEKTBEARBEITUNG MIT EINEM PLANARANTRIEBSSYSTEM**
OBJECT PROCESSING USING A PLANAR DRIVE SYSTEM
USINAGE D'OBJET AU MOYEN D'UN SYSTÈME D'ENTRAÎNEMENT PLANAIRE

(30) Priorität: 12.04.2021 DE 102021108987
(43) Veröffentlichungstag der Anmeldung: 14.02.2024
(73) Patentinhaber: Beckhoff Automation GmbH, 33415 Verl (DE)
(72) Erfinder: SCHULTE, Felix, 33397 Rietberg (DE); BECKHOFF, Johannes, 33758 Schloß Holte-Stukenbrock (DE); BECKHOFF, Hans, 33415 Verl (DE)
(74) Vertreter: Patentanwaltskanzlei WILHELM & BECK
(86) Internationale Anmeldenummer: PCT/EP2022/059688
(87) Internationale Veröffentlichungsnummer: WO 2022/218951

(56) Entgegenhaltungen:
- EP-A1- 3 656 684
- EP-A2- 0 571 980
- WO-A1-2015/179962
- US-A1- 2008 067 415
- US-A1- 2017 294 827

## Beschreibung

Die Erfindung betrifft ein Verfahren zum Bearbeiten eines Objekts mittels eines Planarantriebssystems. Die Erfindung betrifft ferner ein Planarantriebssystem mit einer Steuereinheit für ein Planarantriebssystem zur Umsetzung des Verfahrens.

Diese Patentanmeldung beansprucht die Priorität der deutschen Patentanmeldung DE 10 2021 108 987.5 vom 12. April 2021.

Planarantriebssysteme können unter anderem in der Automatisierungstechnik, insbesondere der Fertigungstechnik, der Handhabungstechnik und der Verfahrenstechnik, eingesetzt werden. Mittels Planarantriebssystemen kann ein bewegliches Element, beispielsweise ein Läufer, einer Anlage oder Maschine in mindestens zwei linear unabhängigen Richtungen bewegt oder positioniert werden. Planarantriebssysteme können einen permanent erregten elektromagnetischen Planarmotor mit einem Planarstator und einem auf dem Stator in mindestens zwei Richtungen beweglichen Läufer umfassen.

Bei einem permanent erregten elektromagnetischen Planarmotor wird dadurch eine Antriebskraft auf den Läufer ausgeübt, dass bestromte Spulengruppen der Statoreinheit mit Antriebsmagneten mehrerer Magnetanordnungen des Läufers magnetisch wechselwirken.

Aus dem Stand der Technik sind Planarantriebssysteme mit rechteckigen und längsgestreckten Spulengruppen und rechteckigen und längsgestreckten Magneteinheiten des Läufers bekannt. Ein solches Planarantriebssystem wird beispielsweise in der DE 10 2017 131 304 A1 beschrieben. Mit einem solchen Planarantriebssystem ist insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulengruppen angeordnet sind, parallel zur Statorfläche frei beweglich und senkrecht zur Statorfläche zumindest in verschiedenen Abständen zur Statorfläche bewegt werden kann. Ferner ist ein solches Planarantriebssystem in der Lage, den Läufer um einige Grad zu kippen und um einige Grad zu rotieren. Die letztgenannten Bewegungen sind dabei oberhalb von beliebigen Punkten der Statorfläche durchführbar. Der Läufer kann insbesondere um bis zu 20° aus einer Normallage heraus rotiert werden. Eine vollständige Rotation des Läufers ist oberhalb von beliebigen Punkten der Statorfläche nicht möglich.

Aus dem Stand der Technik, Proceedings of DSCC2008 2008 ASME Dynamic Systems and Control Conference Oktober 20-22, 2008, Ann Arbor, Michigan, USA, sind Planarantriebssysteme mit runden Spulengruppen bekannt. Rund ausgebildete Spulengruppen sind vorteilhaft für die Rotation des Läufers, weisen jedoch erhebliche Nachteile beim linearen translativen Bewegen des Läufers auf und können zu unruhigen und ruckhaften Verfahr-Bewegungen führen.

Aus der US 2008/067415 A1 ist ein Planarantriebssystem mit rotierbaren Läufer bekannt, wobei durch ein Zusammenspiel zwischen einem Objekt auf dem Läufer und einem Bearbeitungselement während der Läuferrotation ein Bearbeiten des Objekts ausgeführt wird. Die WO 2015/179962 A1 und die US 2017/294827 A1 beschreiben weitere Planarantriebssysteme mit rotierbaren Läufern, Aus der EP 0 571 980 A2 ist eine Anlage zum Verschrauben eines Deckels auf einer Flasche bekannt.

Es ist eine Aufgabe der Erfindung, ein Verfahren zum Bearbeiten eines Objekts mittels eines Planarantriebssystems anzugeben, bei dem eine Läuferrotation genutzt wird. Eine weitere Aufgabe der Erfindung ist es, eine Steuereinheit für das Planarantriebssystem anzugeben, mit dem das Verfahren gesteuert werden kann. Eine weitere Aufgabe der Erfindung ist es, ein Planarantriebssystem mit einer solchen Steuereinheit anzugeben.

Diese Aufgaben werden durch das Verfahren zum Bearbeiten eines Objekts, sowie das Planarantriebssystem der unabhängigen Patentansprüche gelöst. Vorteilhafte Ausgestaltungen sind in den abhängigen Patentansprüchen angegeben.

Ein Planarantriebssystem weist zumindest eine Statoreinheit mit jeweils einer Mehrzahl von Spulengruppen zum Erzeugen eines Statormagnetfelds, eine Statorfläche oberhalb der Statoreinheit, sowie zumindest einen Läufer mit einer Mehrzahl von Magneteinheiten zum Erzeugen eines Läufermagnetfelds auf. Die Spulengruppen können dabei als rechteckige und längsgestreckte Spulengruppen ausgestaltet sein. Die zumindest eine Statoreinheit kann dabei derart ausgestaltet sein, dass die Mehrzahl von Spulengruppen zwei voneinander unterschiedliche, rechtwinklig zueinanderstehende Haupterstreckungsrichtungen aufweisen und die Magneteinheiten des Läufers ebenfalls rechtwinklig zueinander angeordnet sind. Durch Bestromen der Spulengruppen kann der Läufer dann oberhalb der Statorfläche in die beiden Haupterstreckungsrichtungen bewegt werden. Ferner ist auch eine vektormäßige Überlagerung der beiden Bewegungen und somit eine freie Positionierung des Läufers oberhalb der Statorfläche möglich. Dabei kann, wie im von der Anmelderin unter dem Namen XPlanar vertriebenen Planarantriebssystem umgesetzt, vorgesehen sein, dass die Statorfläche aus Oberseiten mehrerer Statormodule zusammengesetzt ist und in jedem Statormodul vier Statoreinheiten vorgesehen sind. Das Planarantriebssystem weist ferner ein oberhalb der Statorfläche angeordnetes Bearbeitungselement auf. Ferner weist das Planarantriebssystem zumindest eine Rotationsposition auf, wobei der Läufer in der Rotationsposition um eine Drehachse senkrecht zur Statorfläche rotiert werden kann. Eine räumliche Anordnung des Bearbeitungselements ist durch die Rotationsposition vorgegeben. Ein Verfahren zum Bearbeiten eines Objekts mittels dieses Planarantriebssystems weist die folgenden Schritte auf:
- Bestromen der Spulengruppen derart, dass sich der Läufer mit dem auf dem Läufer angeordneten Objekt in die Rotationsposition bewegt;
- Bestromung der Spulengruppen derart, dass der Läufer rotiert;
- Bearbeiten des Objekts mittels der Läuferrotation, wobei das Bearbeitungselement auf das Objekt einwirkt.

Durch die durch die Rotationsposition vorgegebene räumliche Anordnung des Bearbeitungselements kann dabei erreicht werden, dass ein Zusammenspiel zwischen Objekt und Bearbeitungselement während der Läuferrotation zum Bearbeiten des Objekts führt. Mit anderen Worten bedeutet dies, dass eine räumliche Anordnung des Bearbeitungselements hinsichtlich der Rotationsposition gewählt ist. Insbesondere kann vorgesehen sein, dass oberhalb der Statorfläche mehrere Rotationspositionen vorgesehen sind, wobei die räumliche Anordnung des Bearbeitungselements durch eine der Rotationspositionen vorgegeben ist. Es kann dabei vorgesehen sein, dass durch das Bearbeitungselement weitere Bewegungen ausgeführt werden. Insbesondere kann das Bearbeitungselement parallel zur Statorfläche bewegt oder senkrecht zur Statorfläche bewegt werden. Sollen das Bearbeitungselement und das Objekt gegeneinander rotiert werden während der Bearbeitung, so kann vorgesehen sein, dass diese Rotation ausschließlich durch eine Drehung des Läufers erreicht wird.

Dieses Verfahren ermöglicht es also, ein zu bearbeitendes Objekt auf dem Läufer anzuordnen und eine Bearbeitung des Objekts mittel des Bearbeitungselements ausgelöst durch die Läuferrotation durchzuführen. Ein solches Verfahren ermöglicht eine flexible Bearbeitung des Objekts, da der Bearbeitungsschritt gegebenenfalls nicht von jedem Läufer mit einem Objekt durchgeführt, sondern nur von einzelnen Läufern durchgeführt werden kann. Insgesamt stellt das Verfahren, bei dem ein Objekt mittels einer Läuferrotation und eines Bearbeitungselements bearbeitet wird, eine weitere Möglichkeit für ein flexibles Automatisierungssystem dar, bei dem zum Transport der Objekte ein Planarantriebssystem mit oberhalb der Statorfläche beweglichen Läufern verwendet wird. Die Läufer können dabei sowohl dem Transport als auch der Bearbeitung mittels der Rotation dienen, so dass ein flexibles Automatisierungssystem möglich wird, bei dem Objekte möglichst wenig oft auf Läufer oder von Läufern herunter bewegt werden müssen, da möglichst viele Bearbeitungsschritte mit dem auf dem Läufer angeordneten Objekt durchgeführt werden können.

Nach dem Verfahren ist die Rotationsposition anhand eines Berührungspunktes von vier Statoreinheiten bestimmt. Dies ist insbesondere dann der Fall, wenn der Läufer ebenfalls vier Magneteinheiten umfasst und die vier Statoreinheiten und die vier Magneteinheiten des Läufers derart wechselwirken können, dass ein im Mittelpunkt des Läufers angeordnetes Symmetriezentrum des Läufers oberhalb des Berührungspunktes der vier Statoreinheiten angeordnet ist. Die Statoreinheiten können dabei innerhalb eines oder mehrerer Statormodule, die gemeinsam die Statoroberflächen bilden können, angeordnet sein. Sind beispielsweise vier Statoreinheiten innerhalb eines Statormoduls angeordnet, so kann die Rotationsposition durch den Berührungspunkt der vier Statoreinheiten innerhalb des Statormoduls, aber auch durch Berührpunkte der Statoreinheiten benachbarter Statormodule, also beispielsweise in der Mitte einer Außenkante des Statormoduls oder an einer Ecke des Statormoduls vorgegeben sein.

Die Position des Bearbeitungselements ist also nicht frei wählbar, sondern hängt in diesem Fall von der Position und Ausgestaltung der Statoreinheiten ab. Dadurch, dass der Läufer jedoch an allen Rotationspositionen, an denen sich vier Statoreinheiten berühren, rotiert werden kann, ermöglicht insgesamt trotzdem eine flexible Anordnung des Planarantriebssystems mit einer für die Bearbeitung des Objekts ausreichenden Anzahl von Rotationspositionen.

Erfindungsgemäß werden das Bearbeitungselement und der Läufer während der Läuferrotation parallel zur Drehachse relativ zueinander bewegt. Dies kann einerseits durch eine Bewegung des Läufers während der Rotation zum Bearbeitungselement hin oder vom Bearbeitungselement weg erfolgen. Ferner kann alternativ oder zusätzlich auch das Bearbeitungselement während der Läuferrotation parallel zur Drehachse beispielsweise auf die Statorfläche zu oder von der Statorfläche wegbewegt werden. Dies ermöglicht spezielle Bearbeitung, wie beispielsweise das Aufschrauben eines Deckels, das Einschrauben einer Schraube oder das Bearbeiten des Objekts auf dem Läufer mittels eines Lasers in unterschiedlichen Höhen.

Erfindungsgemäß wird der Läufer derart rotiert und das Bewegen des Bearbeitungselements und des Läufers parallel zur Drehachse relativ zueinander derart ausgeführt, dass sich für das auf dem Läufer angeordnete Objekt und das Bearbeitungselement eine erste Bewegung und eine zweite Bewegung relativ zueinander überlagern. Die erste Bewegung ist dabei die Rotation des Läufers und die zweite Bewegung die Bewegung des Läufers und/oder des Bearbeitungselements parallel zur Drehachse relativ zueinander. Eine solche überlagerte Bewegung kann auch als relativ zueinander wendelförmig aufgefasst werden. Diese Ausführungsform ist insbesondere für alle Verschraubungen geeignet, da durch die wendelförmige Bewegung während einer vollständigen Umdrehung des Läufers ein Gangunterschied eines Gewindes überwunden werden kann und somit ein entsprechendes Verschrauben erfolgt.

In einer Ausführungsform des Verfahrens hält das Bearbeitungselement einen Deckel für das Objekt. Durch die relativ zueinander wendelförmige Bewegung erfolgt eine Verschraubung des Deckels mit dem Objekt. Das Bearbeitungselement kann hierzu einen Deckelhalter umfassen und das Objekt beispielsweise eine Flasche oder eine Dose sein. In einem Automatisierungssystem kann beispielsweise vorgesehen sein, dass die Flasche oder die Dose oder allgemein ein Behältnis zunächst mit einem Produkt befüllt und anschließend mit einem Deckel verschraubt wird, indem der Deckel vom Deckelhalter oberhalb der Rotationsposition gehalten wird und anschließend der Läufer mit dem Behältnis unterhalb des Deckels rotiert und dabei gleichzeitig auf den Deckel zu bewegt wird, wobei während einer Umdrehung des Läufers ein Gangunterschied, der einem Schraubgewinde des Deckels entspricht, überwunden wird. Alternativ kann beispielsweise der Deckel vom Deckelhalter oberhalb der Rotationsposition gehalten werden und anschließend der Läufer mit dem Behältnis unterhalb des Deckels rotiert werden. Nun kann der Deckelhalter auf den Läufer zu bewegt werden, so dass während einer Umdrehung des Läufers ein Gangunterschied, der einem Schraubgewinde des Deckels entspricht, überwunden wird. Beide Varianten erlauben, den Deckel mit dem Behältnis zu verschrauben. Dies kann beispielsweise vorteilhaft in einer Abfüllanlage verwendet werden, in der die Behältnisse mit einer Losgröße 1, also individuell befüllt werden sollen. Die befüllten Behältnisse können dann beispielsweise unter verschiedene Bearbeitungselemente belegt werden und beispielsweise eine Deckelfarbe kann signalisieren, um welches Produkt es sich in dem jeweiligen Behältnis handelt. Dies ermöglicht ein äußerst flexibles Abfüllsystem.

Dabei kann vorgesehen sein, dass das Bearbeitungselement derart angeordnet ist, dass ein Mittelpunkt des Deckels oberhalb der Rotationsposition angeordnet ist. Ein Mittelpunkt des Behältnisses kann ebenfalls in der Mitte des Läufers und damit ebenfalls konzentrisch direkt unterhalb des Deckels angeordnet sein, so dass die Verschraubung gut ausgeführt werden kann.

In einer Ausführungsform weist der Läufer einen Schraubenhalter auf. Das Objekt auf dem Läufer ist eine Schraube. Der Schraubenhalter hält die Schraube und dreht die Schraube in ein vom Bearbeitungselement gehaltenes, weiteres Objekt mittels der wendelförmigen Bewegung ein. Der Läufer kann also ebenfalls als Schraubenhalter zum Eindrehen von Schrauben in Objekte verwendet werden. Der Schraubenhalter kann dazu in der Mitte des Läufers angeordnet sein. Ferner kann vorgesehen sein, dass das Bearbeitungselement parallel zur Statorfläche bewegt werden kann und dadurch mehrere Einschraubpositionen des weiteren Objekts mit jeweils einer durch einen Läufer gehaltenen Schraube bestückt werden. Dazu kann beispielsweise vorgesehen sein, dass der Läufer nach dem Eindrehen der Schraube zu einer Schraubenübergabeeinheit bewegt wird und dort eine weitere Schraube aufnimmt und währenddessen das Bearbeitungselement das weitere Objekt in eine andere Position bewegt, der Läufer anschließend wieder in die Rotationsposition bewegt wird und entsprechend die weitere Schraube ebenfalls in das Objekt eindreht. Selbstverständlich kann die weitere Schraube auch durch einen weiteren Läufer an dieser Position in das weitere Objekt eingedreht werden.

In einer Ausführungsform des Verfahrens wird der Läufer während der Drehbewegung entlang der Drehachse von der Statorfläche wegbewegt. Eine Entfernungsänderung des Läufers pro Umdrehung hängt von einer Ganghöhe der Schraube ab. Dadurch lässt sich ein vorteilhaftes Verschraubungssystem erreichen. Alternativ kann das Bearbeitungselement auf den Läufer zubewegt werden, derart dass eine Entfernungsänderung des Bearbeitungselements vom Läufers pro Umdrehung von einer Ganghöhe der Schraube abhängt.

Gemäß dem Verfahren werden Steuerbefehle zur Bestromung der Spulengruppen während der Drehbewegung anhand einer Regelung ausgegeben. Anhand der Regelung werden ferner Drehmomente und/oder Drehimpulse während der wendelförmigen Bewegung berücksichtigt. Ferner ist ein maximales Drehmoment beziehungsweise ein maximaler Drehimpuls vorgegeben. Dadurch kann erreicht werden, dass die Schraube mit dem weiteren Objekt beziehungsweise der Deckel mit dem Objekt mit einem vorgegebenen Drehimpuls oder einem vorgegebenen Drehmoment verschraubt wird. Anhand der zur Bestromung der Spulengruppen vorgegebenen Steuerbefehle und anhand der Istströme innerhalb der Spulengruppen wird dabei das Drehmoment bzw. der Drehimpuls ermittelt. Dadurch können insbesondere Beschädigungen des Objekts bei der Verschraubung mit einem Deckel bzw. des weiteren Objekts beim Eindrehen einer Schraube vermieden werden.

In einer Ausführungsform des Verfahrens wird eine Drehung des Läufers gestoppt bei Erreichen des maximalen Drehmoments. Das maximale Drehmoment ist, wie bereits beschrieben, über die Regelung bestimmt und kann somit auch verwendet werden, um die Drehbewegung zu stoppen. Dies ist insbesondere vorteilhaft beim Verschrauben eines Deckels mit einem Behältnis oder beim Eindrehen einer Schraube.

In einer Ausführungsform umfasst das Bearbeitungselement ein Etikettierelement. Das Etikettierelement kann beispielsweise eingerichtet sein, ein Etikett auf ein rundes Objekt zu übertragen, während das runde Objekt mittels des Läufers am Etikettierelement vorbeigedreht wird. Dabei kann es vorgesehen sein, das Etikettierelement in der Höhe anhand einer Etikettposition auf dem Objekt auszurichten. Auch nicht runde, beispielsweise ovale oder rechteckige Objekte können so etikettiert werden.

In einer Ausführungsform des Verfahrens umfasst das Etikettierelement einen Etikettrollenhalter und eine Abrollvorrichtung. Die Abrollvorrichtung überträgt ein Etikett von der Etikettierrolle auf das auf dem drehenden Läufer angeordnete Objekt während der Drehbewegung des Läufers.

In einer Ausführungsform umfasst das Bearbeitungselement einen Laser. Der Laser bestrahlt eine Oberfläche des Objekts und verändert dabei die Oberfläche. Insbesondere kann der Laser eingerichtet sein, eine Oberfläche des Objekts mittels des Laser zu gravieren, beispielsweise für eine Glasflasche oder für ein Objekt aus Metall. Dabei kann vorgesehen sein, dass eine Vertikalposition des Auftreffpunkts des Lasers auf das Objekt durch eine Bewegung des Lasers senkrecht zur Statorfläche oder eine Bewegung des Lasers parallel zur Drehachse erfolgt. Eine horizontale Positionierung des Auftreffpunkts des Lasers auf dem Objekt kann durch die Rotation des Läufers erreicht werden.

In einer Ausführungsform ist eine Lasersteuerung eingerichtet, den Laser zu aktivieren und zu deaktivieren, wobei anhand einer durch die Rotation des Läufers und eine Bewegung des Lasers entlang der Drehachse und anhand einer Bildinformation eine Aktivierungsabfolge bestimmt wird. Der Laser wird anhand der Aktivierungsabfolge aktiviert und deaktiviert. Dadurch kann beispielsweise ein Bild bzw. eine Graphik mittels des Lasers auf das Objekt übertragen werden.

In einer Ausführungsform werden der Laser und der Läufer parallel zur Drehachse relativ zueinander bewegt. Dies kann entweder durch eine Bewegung des Lasers und/oder durch eine Bewegung des Läufers erreicht werden.

In einer Ausführungsform weist das Bearbeitungselement einen senkrecht zur Drehachse unbeweglichen Rührspatel auf. Der Rührspatel ist direkt über der Rotationsposition angeordnet. Das Objekt umfasst ein Gefäß mit einer Flüssigkeit. Vor der Läuferrotation wird der Rührspatel parallel zur Drehachse hin zum Läufer bewegt und damit in die Flüssigkeit getaucht. Der Rührspatel steht dabei fest hinsichtlich einer Rotationsposition und durch die Rotation des Läufers wird ein Durchmischen bzw. Umrühren der Flüssigkeit im Gefäß erreicht.

Die Erfindung umfasst ferner ein Planarantriebssystem mit zumindest einer Statoreinheit mit jeweils einer Mehrzahl von Spulengruppen zum Erzeugen eines Statormagnetfelds und einer Statorfläche und ferner aufweisend zumindest einen Läufer mit einer Mehrzahl von Magneteinheiten zum Erzeugen eines Läufermagnetfelds. Die Spulengruppen können dabei als rechteckige und längsgestreckte Spulengruppen ausgestaltet sein. Über eine magnetische Kopplung zwischen dem Statormagnetfeld und der Läufermagnetfeld ist der Läufer oberhalb der Statorfläche antreibbar. Das Planarantriebssystem umfasst ferner eine

Steuereinheit und ein Bearbeitungselement, wobei die Steuereinheit die Steuerbefehle an die Statoreinheiten des Planarantriebssystem ausgibt. Dies kann insbesondere auch umfassen, dass die Steuerbefehle an ein Statormodul des Planarantriebssystems ausgegeben werden und das Statormodul eine oder mehrere Statoreinheiten beinhaltet. Das Statormodul kann zusätzlich eine Modulsteuerung umfassen, in der die Steuerbefehle hinsichtlich der Bestromung der Spulengruppen der Statoreinheit oder der Statoreinheiten nach dem erfindungsgemäßen Verfahren umgesetzt werden.

Die Erfindung wird anhand der beigefügten Figuren näher erläutert. Hierbei zeigen:
- Fig. 1: ein Planarantriebssystem mit einem Läufer und Rotationspositionen;
- Fig. 2: eine Draufsicht auf ein Planarantriebssystem während einer Rotation;
- Fig. 3: das Planarantriebssystem der Figur 2 in einer Seitenansicht mit einem Bearbeitungselement;
- Fig. 4: eine Bearbeitung eines Objekts mittels des Planarantriebssystems der Figuren 2 und 3;
- Fig. 5: das Planarantriebssystem der Figuren 2 bis 4 nach der Bearbeitung des Objekts;
- Fig. 6: eine Seitenansicht eines weiteren Planarantriebssystems vor einer Objektbearbeitung;
- Fig. 7: eine Seitenansicht eines weiteren Planarantriebssystems vor einer Objektbearbeitung;
- Fig. 8: eine Draufsicht auf das Planarantriebssystem der Figur 7 während der Objektbearbeitung;
- Fig. 9: eine Draufsicht auf ein weiteres Planarantriebssystem während einer Objektbearbeitung;
- Fig. 10: eine Seitenansicht des Planarantriebssystems der Figur 9;
- Fig. 11: eine Seitenansicht eines Planarantriebssystems vor einer Objektbearbeitung;
- Fig. 12: eine Seitenansicht des Planarantriebssystems der Figur 11 während einer Objektbearbeitung;
- Fig. 13: eine Seitenansicht eines weiteren Planarantriebssystems während einer Objektbearbeitung; und
- Fig. 14: eine Seitenansicht eines weiteren Planarantriebssystems während einer Objektbearbeitung.

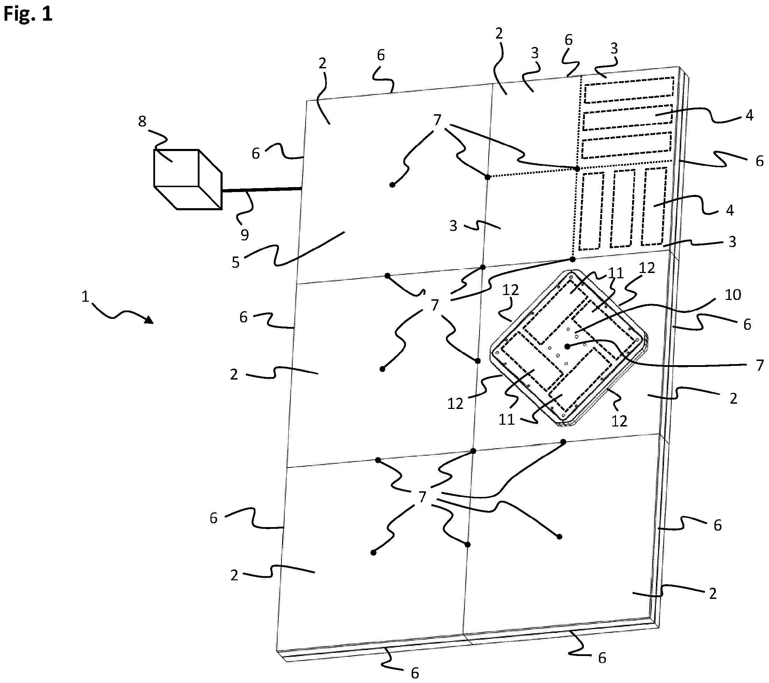

Figur 1 zeigt ein Planarantriebssystem 1, mit dem das erfindungsgemäße Verfahren zum Bearbeiten eines Objekts ausgeführt werden kann. Das in Figur 1 gezeigte Planarantriebssystem 1 weist sechs Statormodule 2 auf, wobei die Statormodule 2 derart angeordnet sind, dass ein Rechteck von zwei auf drei Statormodulen 2 gebildet ist. Auch andere Anordnungen der Statormodule 2 sind denkbar, es können auch mehr oder weniger als sechs Statormodule 2 angeordnet werden. Im oben rechts dargestellten Statormodul 2 ist ein Innenleben des Statormoduls 2 skizziert, wobei das Statormodul 2 vier Statoreinheiten 3 umfasst, wobei die vier Statoreinheiten 3 innerhalb eines Statormoduls 2 in einer quadratischen zwei-auf-zwei-Anordnung angeordnet sind. Ferner ist für zwei Statoreinheiten 3 dargestellt, dass die Statoreinheiten 3 Spulengruppen 4 umfassen, wobei die Spulengruppen 4 mit unterschiedlicher Ausrichtung dargestellt sind. Die Spulengruppen 4 dienen zum Erzeugen eines Statormagnetfelds. Die Spulengruppen 4 sind in der dargestellten Ausführungsform als rechteckige und längsgestreckte Spulengruppen 4 ausgestaltet. In jeder Statoreinheit 3 der Statormodule 2 sind jeweils drei einzelne, rechteckige und längsgestreckte Spulen einer Spulengruppe 4 dargestellt. Ebenso könnte bei einer nicht dargestellten Ausführungsform eine andere Anzahl an einzelnen rechteckigen und längsgestreckten Spulen eine Spulengruppe 4 bilden. Dabei orientiert sich ihre Längserstreckung parallel zu einer der Kanten der jeweiligen Statoreinheit 3. Unterhalb jeder der dargestellten Spulengruppen 4 sind weitere Spulen vorhanden, die in Bezug auf ihre Längserstreckung eine um 90° gedrehte Orientierung aufweisen. Dieses Raster aus längserstreckten und rechteckigen Spulen einer Spulengruppe 4 kann mehrfach übereinander ausgebildet sein. Real sind weder Statoreinheiten 3 noch Spulengruppen 4 sichtbar, da sie durch ein Gehäuse des Statormoduls 2 umgeben sind. Die sechs Statormodule 2 bilden eine zusammenhängende Statorfläche 5 oberhalb der Statoreinheiten 3. Ferner ist ein Läufer 10 angeordnet, wobei der Läufer eine Mehrzahl von Magneteinheiten 11 zum Erzeugen eines Läufermagnetfelds aufweist. Die Spulengruppen 4 können bei entsprechender Bestromung mit den Magneteinheiten 11 wechselwirken und dadurch den Läufer 10 innerhalb des Planarantriebssystems 1 oberhalb der Statorfläche 5 bewegen. Durch die Statorfläche 5 ist also eine Bewegungsebene für den Läufer 10 definiert. Die Spulengruppen 4 sind parallel zu den Außenkanten 6 angeordnet. Da die Statormodule 2 jeweils im 90° Winkel zueinanderstehende Außenkanten 6 aufweisen, sind also zwei verschiedene Ausrichtungen der Spulengruppen 4 für die Bewegung des Läufers 10 notwendig. Dabei ist die Darstellung in Figur 1 vereinfacht, da in jeder Statoreinheit 3 mehrere Spulengruppen 4 angeordnet sind, die jeweils im 90° Winkel zueinanderstehen, jedoch nur jeweils eine Spulengruppe 4 dargestellt ist. Die Magneteinheiten 11 sind ebenfalls parallel zu Läuferaußenkanten 12 des Läufers 10 angeordnet. Ferner sind die Magneteinheiten 11 innerhalb des Läufers 10 an den Läuferaußenkanten 12 umlaufend angeordnet und können jeweils mit den Spulengruppen 4 wechselwirken, um den Läufer parallel zu den Au-βenkanten 6 der Statormodule 2 zu bewegen. Ferner ist eine Überlagerung zweier zu den Außenkanten 6 parallelen Bewegungen möglich, so dass der Läufer 10 in alle Richtungen parallel zur Statorfläche 5 bewegt werden kann. Die Anordnung von vier Statoreinheiten 3 innerhalb eines Statormoduls 2 entspricht den von der Anmelderin unter dem Namen XPlanar vertriebenen Statormodulen 2 für ein Planarantriebssystem 1. Es kann alternativ vorgesehen, auch mehr oder weniger Statoreinheiten 3 innerhalb eines Statormoduls 2 anzuordnen. Beispielsweise kann jedes Statormodul 2 nur eine Statoreinheit 3 umfassen oder mehr als vier Statoreinheiten 3 umfassen.

Das Planarantriebssystem 1 weist eine Mehrzahl von Rotationspositionen 7 auf. Die Rotationspositionen 7 sind dabei immer derart angeordnet, dass sich in der Rotationsposition 7 vier Statoreinheiten 3 berühren. Dies bedeutet insbesondere, dass Eckpunkte der Statoreinheiten 3 jeweils die Rotationspositionen 7 definieren, wobei die Rotationspositionen 7 immer an den Stellen angeordnet sind, an denen vier Ecken der Statoreinheiten 3 zusammentreffen. Dies kann insbesondere in der Mitte der Statormodule 2, in einer Mitte der Au-βenkanten 6 der Statormodule 2 oder in Eckbereichen der Statormodule 2 sein. Außerhalb der Rotationspositionen 7 ist eine Rotation des Läufers 10 eingeschränkt. Außerhalb der Rotationspositionen 7 können Läufer 10 also nur bis zu einem vorbestimmten Winkel, beispielsweise 15° oder 20°, aus einer Ruhelage gedreht werden, wobei die Läuferaußenkanten 12 in der Ruhelage parallel zu den Außenkanten 6 liegen. In den Rotationspositionen 7 ist eine freie Drehung des Läufers 10 möglich, und in Figur 1 dadurch verdeutlicht, dass der Läufer eine Drehung um 45° ausgeführt hat. Die in Figur 1 gezeigte Ausrichtung des Läufers 10 ist also nur in einer Rotationsposition 7 erreichbar. Der Läufer 10 befindet sich in Figur 1 in der Mitte eines Statormoduls 2 und damit ebenfalls in einer Rotationsposition 7.

Ebenfalls in Figur 1 dargestellt ist eine Steuereinheit 8 und eine Kommunikationsleitung 9, wobei die Steuereinheit 9 mit der Kommunikationsleitung 9 mit einem der Statormodule 2 verbunden ist. Dabei kann vorgesehen sein, dass die Statormodule 2 Kommunikationssignale untereinander weitergeben können. Alternativ könnten auch mehrere Kommunikationsleitungen 9 vorgesehen sein, wobei dann jedes Statormodul 2 mit der Steuereinheit 8 verbunden sein kann (nicht in Figur 1 gezeigt). Die Steuereinheit 8 ist eingerichtet, über die Kommunikationsleitung 9 Steuerbefehle an die Statormodule 2 auszugeben, wobei die Statormodule 2 eingerichtet sind, die Spulengruppen 4 anhand der Steuersignale zu bestromen und dadurch eine Bewegung des Läufers 10 parallel zur Statorfläche 5 in eine Rotationsposition 7 zu steuern und, wenn der Läufer 10 in der Rotationsposition 7 angeordnet ist, die Spulengruppen 4 derart zu bestromen, dass sich der Läufer 10 dreht bzw., dass der Läufer 10 rotiert. Die Spulengruppen 4 können ferner derart bestromt werden, dass der Läufer 10 senkrecht zur Statorfläche 5 bewegt wird.

Das in Figur 1 gezeigte Planarantriebssystem 1 kann in der Automatisierungstechnik, insbesondere der Fertigungstechnik, der Handhabungstechnik und der Verfahrenstechnik, eingesetzt werden, um Objekte zu bearbeiten. Dabei können die Objekte beispielsweise auf dem Läufer 10 angeordnet sein oder oberhalb der Statorfläche 5 von einem Halter gehalten werden und durch den Läufer 10 entsprechend bearbeitet werden. Dadurch, dass der Läufer 10 in der Rotationsposition 7 eine Drehbewegung ausführen kann, ergeben sich vorteilhafte neue Ausgestaltungen für mögliche Objektbearbeitungen, die im Folgenden genauer erläutert werden. Dazu kann es vorgesehen sein, dass ein Bearbeitungselement oberhalb der Statorfläche 5 angeordnet ist und eine räumliche Anordnung des Bearbeitungselements durch die Rotationsposition 7, in der Läufer 10 rotiert werden soll, vorgegeben ist. Ein Objekt kann mittels der Läuferrotation bearbeitet werden, wobei das Bearbeitungselement ebenfalls auf das Objekt einwirkt. Ferner kann vorgesehen sein, dass das Bearbeitungselement und der Läufer 10 während der Läuferrotation parallel zu einer Drehachse relativ zueinander bewegt werden.

Die weiteren Figuren enthalten gegebenenfalls die im Zusammenhang mit Figur 1 erläuterten Bezugszeichen. In der weiteren Beschreibung wird gegebenenfalls auf diese Bezugszeichen nicht weiter eingegangen, da die mit diesen Bezugszeichen beschriebenen Teile des Planarantriebssystems 1 im Zusammenhang mit Figur 1 erläutert wurden.

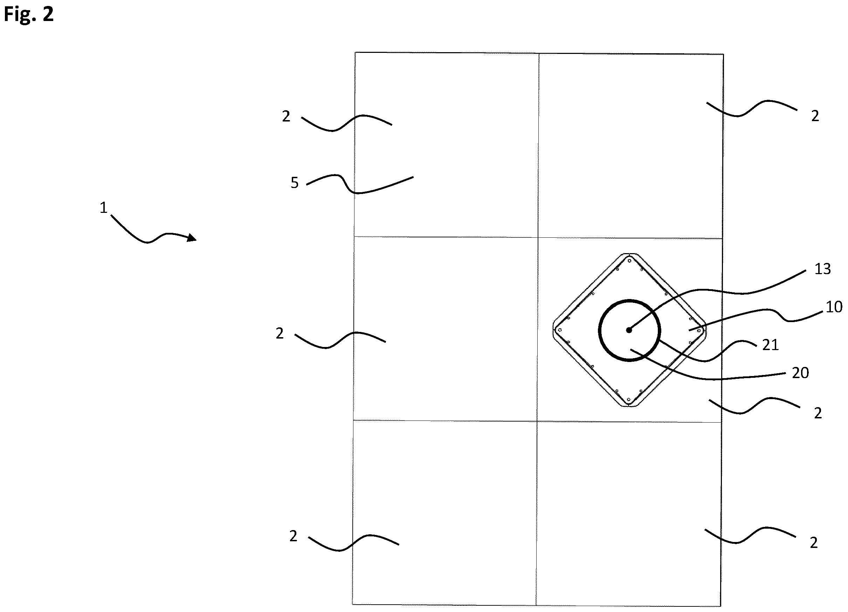

Figur 2 zeigt eine Draufsicht auf ein Planarantriebssystem 1, das im Wesentlichen aufgebaut ist wie das Planarantriebssystem 1 der Figur 1. Auf dem Läufer 10 ist ein Objekt 20, in diesem Fall eine Dose 21, angeordnet. Eine Drehachse 13 steht senkrecht auf der Statorfläche 5 und ist durch eine Rotationsposition 7, in diesem Fall in der Mitte eines Statormoduls 2, geführt. Der Läufer 10 kann um die Drehachse 13 gedreht werden.

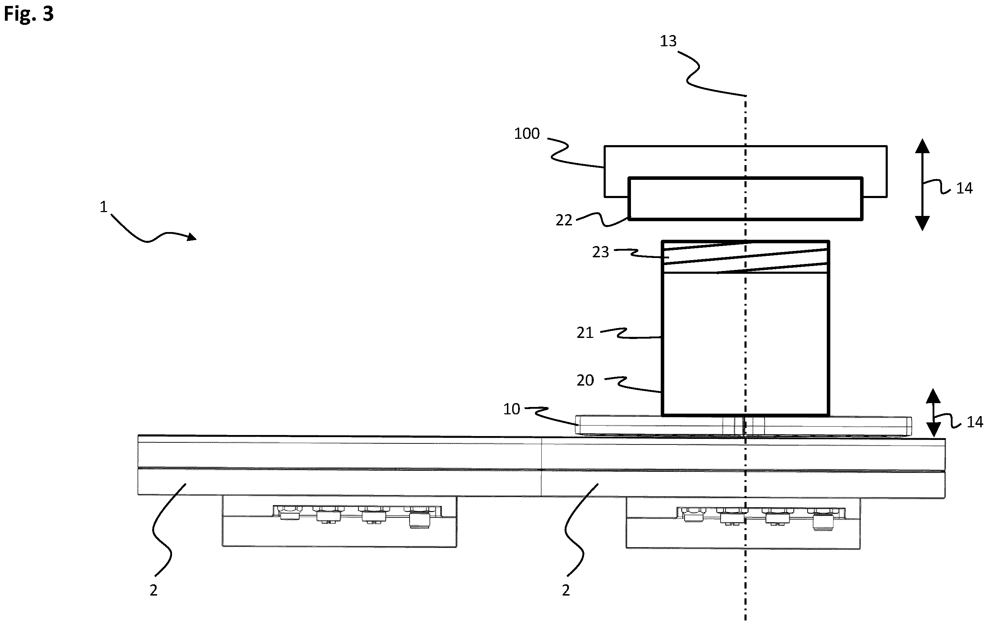

Figur 3 zeigt das Planarantriebssystem 1 der Figur 2 in einer Seitenansicht. Die Dose 21, also das Objekt 20, ist auf dem Läufer 10 angeordnet. Oberhalb des Objekts 20 ist ein Bearbeitungselement 100 dargestellt, welches einen Deckel 22 hält. Die Dose 21 weist ein Gewinde 23 auf, mittels dessen der Deckel 22 mit der Dose 21 verschraubt werden kann. Um das Objekt 20 zu bearbeiten, wird der Läufer 10 zunächst mittels einer Bestromung der Spulengruppen 4 derart bewegt, dass sich der Läufer 10 mit dem darauf angeordneten Objekt 20 in die Rotationsposition 7 bewegt. Anschließend werden die Spulengruppen 4 derart bestromt, dass der Läufer 10 rotiert. Nun wird das Objekt 20 mittels der Läuferrotation bearbeitet, wobei das Bearbeitungselement 100 auf das Objekt 20 einwirkt. Dies kann im Ausführungsbeispiel der Figur 3 dadurch erfolgen, dass entweder der Läufer 10 und/oder das Bearbeitungselement 100 entlang der Bewegungsrichtung 14 parallel zur Drehachse 13 derart bewegt werden, dass sich die Dose 21 und der Deckel 22 aufeinander zu bewegen. Die Bearbeitung durch das Bearbeitungselement 100 kann dabei, wie im Ausführungsbeispiel der Figuren 2 und 3 angedeutet, ein Verschließen der Dose 21 mittels des Deckels 22 umfassen, bei dem der Deckel 22 auf das Gewinde 23 der Dose 21 aufgeschraubt wird.

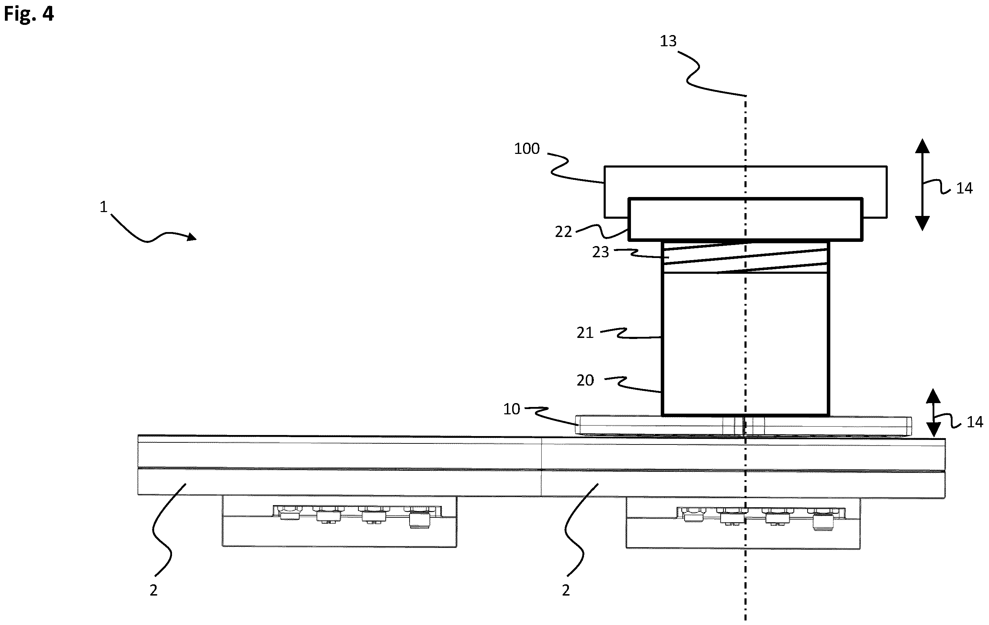

Figur 4 zeigt eine Seitenansicht des Planarantriebssystems 1 der Figuren 2 und 3, nachdem das Bearbeitungselement 100 etwas auf den Läufer 10 zubewegt wurde. Der Deckel 22 befindet sich nun unmittelbarer Nähe zum Gewinde 23 und kann nun mit der Dose 21 verschraubt werden.

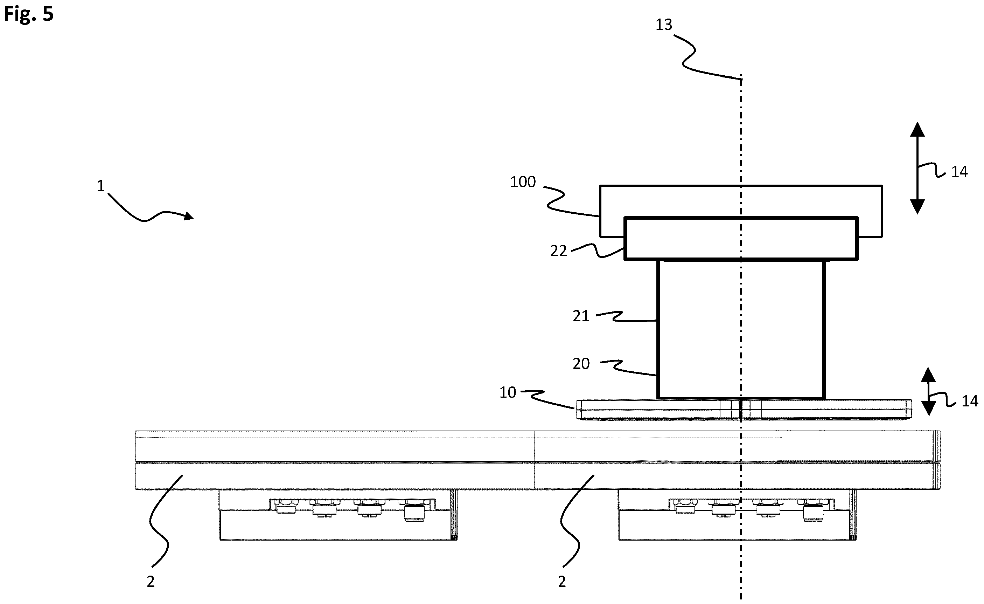

Figur 5 zeigt das Planarantriebssystem der Figuren 1 bis 4, nachdem der Deckel 22 mit der Dose 21 verschraubt wurde. Dabei wurde während der Rotation des Läufers 10 dieser zusätzlich von der Statorfläche 5 wegbewegt und die Dose 21 durch die Drehbewegung und die Wegbewegung von der Statorfläche 5 in den Deckel 21 hineingedreht.

Im Ausführungsbeispiel der Figuren 2 bis 5 ist gezeigt, dass das Bearbeitungselement 100 und der Läufer 10 während der Läuferrotation parallel zur Drehachse 13 relativ zueinander bewegt werden können. Insbesondere kann zunächst das Bearbeitungselement 100 auf die Statorfläche 5 zubewegt werden, während der Läufer 10 noch nicht rotiert. Diese Bewegung kann grundsätzlich auch weggelassen werden. Anschließend wird der Läufer 10 rotiert und gleichzeitig von der Statorfläche 5 wegbewegt, um das Eindrehen der Dose 21 in den Deckel 22 zu erreichen. Alternativ kann ebenfalls anstelle des Bewegens des Läufers 10 von der Statorfläche 5 weg eine weitere Bewegung des Bearbeitungselements 100 hin zur Statorfläche 5 vorgesehen sein. Zusätzlich kann vorgesehen sein, dass der Läufer 10 rotiert und gleichzeitig von der Statorfläche 5 wegbewegt wird, während sich zusätzlich das Bearbeitungselement 100 hin zur Statorfläche 5 bewegt.

In einem Ausführungsbeispiel werden der Läufer 10 und das Bearbeitungselement 100 parallel zur Drehachse 13 relativ zueinander derart bewegt, dass sich für das auf dem Läufer 10 angeordnete Objekt 20 und das Bearbeitungselement 100 eine erste Bewegung und eine zweite Bewegung relativ zueinander überlagern. Die erste Bewegung ist dabei die Rotation des Läufers 10, während die zweite Bewegung eine Bewegung des Läufers 10 und/oder des Bearbeitungselements 100 relativ zueinander parallel zur Drehachse 13 umfasst. Eine solche Bewegung kann als relativ zueinander wendelförmig bezeichnet werden. Dies ermöglicht ein einfaches Verschrauben des Objekts 20, hier der Dose 21, mit dem vom Bearbeitungselement 100 gehaltenen Deckel 22. Eine relative Änderung einer Entfernung des Läufers 10 und des Bearbeitungselements 100 zueinander während einer vollständigen Umdrehung des Läufers 10 hängt dabei von einer Ganghöhe des Gewindes 23 ab.

In einem Ausführungsbeispiel hält das Bearbeitungselement 100 einen Deckel 22 für das Objekt 20, wie in den Figuren 3 bis 5 gezeigt. Durch die Überlagerung der ersten Bewegung und der zweiten Bewegung erfolgt eine Verschraubung des Deckels 22 mit der Dose 21, also mit dem Objekt 20. Es kann vorgesehen sein, dass das Bearbeitungselement 100 derart angeordnet ist, dass ein Mittelpunkt des Deckels 22 oberhalb der Rotationsposition 7 angeordnet ist.

Im Ausführungsbeispiel der Figuren 2 bis 5 kann anstelle der Dose 21 und des Deckels 22 auch vorgesehen sein, dass das Objekt 20 eine Flasche umfasst, und während der Drehbewegung des Läufers ein Deckel 22 mit dem Objekt 20, also der Flasche, verschraubt wird.

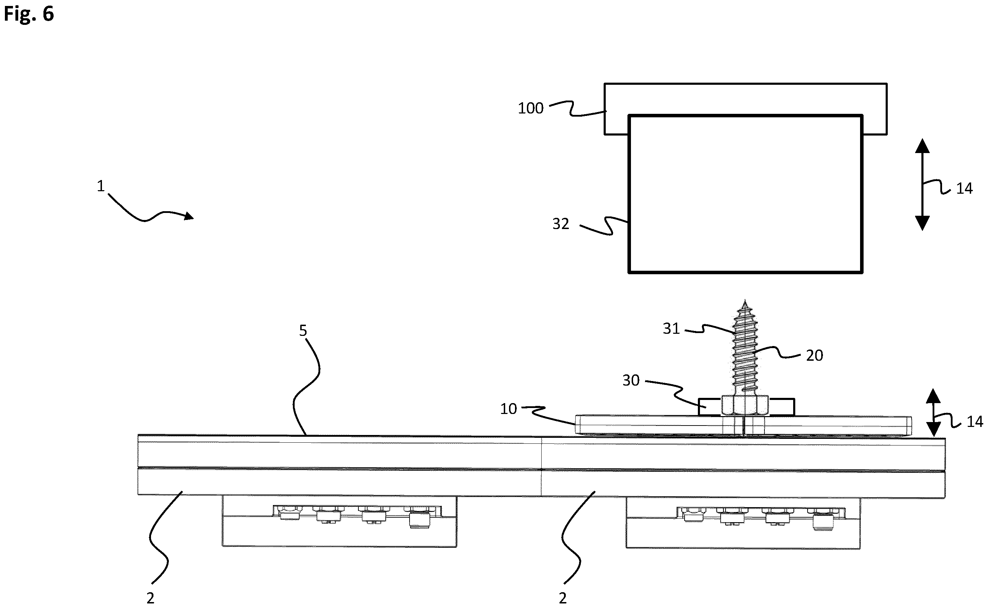

Figur 6 zeigt eine Seitenansicht eines weiteren Ausführungsbeispiels eines Planarantriebssystems 1, bei dem mittels einer Rotation eines Läufers 10 ein Objekt 20 bearbeitet werden kann. Der Läufer 10 umfasst dabei einen Schraubenhalter 30 und das Objekt 20 ist eine Schraube 31. Ein weiteres Objekt 32 wird vom Bearbeitungselement 100 gehalten. Analog zum Verschrauben des Deckels 22 und der Dose 21 des Ausführungsbeispiels der Figuren 2 bis 5 kann im Ausführungsbeispiel der Figur 6 die Schraube 31 durch die Rotation des Läufers 10 und eine gleichzeitige Bewegung des Läufers 10 von der Statorfläche 5 weg bzw. des Bearbeitungselements 100 zur Statorfläche 5 hin derart ausgeführt werden, dass die Schraube 31 in das weitere Objekt 32 eingedreht wird. Das weitere Objekt 32 kann hierzu ein entsprechendes Gewinde aufweisen. Dabei kann vorgesehen sein, dass eine relative Änderung einer Entfernung des Läufers 10 und des Bearbeitungselements 100 zueinander während einer vollständigen Umdrehung des Läufers 10 von einer Ganghöhe der Schraube 31 abhängt.

Im Ausführungsbeispiel der Figur 6 kann vorgesehen sein, dass der Schraubenhalter 30 mit der Schraube 31 mittig auf dem Läufer 10 angeordnet ist. Es kann ferner vorgesehen, dass das Bearbeitungselement 100 zusätzlich parallel zur Statorfläche 5 bewegt werden kann, um ein Gewinde des weiteren Objekts 32 oberhalb der Rotationsposition 7 anzuordnen. Insbesondere kann bei dieser Ausgestaltung des Verfahrens vorgesehen sein, dass mehrere Läufer 10 mit Schraubenhaltern 30 ausgerüstet werden und entsprechend mit Schrauben 31 bestückt werden. Nachdem eine Schraube 31 in das weitere Objekt 32 eingeschraubt wurde, kann der entsprechende Läufer 10 unter dem weiteren Objekt 32 herausbewegt werden und ein weiterer Läufer mit einer weiteren Schraube an der Rotationsposition 7 positioniert werden, das Bearbeitungselement 100 mit dem weiteren Objekt 32 parallel zur Statorfläche 5 verschoben werden und anschließend die weitere Schraube ebenfalls in das weitere Objekt 32 eingeschraubt werden. Es kann ferner vorgesehen sein, dass der Läufer 10 und oder der weitere Läufer an einer Schraubenübergabeeinheit weitere Schrauben aufnehmen können. In diesem Fall kann gegebenenfalls auch der Läufer 10 zum Eindrehen der weiteren Schraube verwendet werden.

Alternativ (nicht gezeigt) kann vorgesehen sein, dass ein Schraubenhalter 30 mit Schraube 31 vom Bearbeitungselement 100 gehalten wird und das Objekt 20 auf dem Läufer 10 angeordnet ist, wobei mittels der Rotation des Läufers 10 und einer Bewegung des Läufers 10 und des Bearbeitungselements 100 relativ zueinander die Schraube 31 in das Objekt 20 eingedreht wird.

In den Ausführungsbeispielen der Figuren 2 bis 6 kann vorgesehen sein, dass die Bewegung des Läufers 10 und des Bearbeitungselements 100 relativ zueinander ebenfalls von der in Figur 1 gezeigten Steuereinheit 8 gesteuert und entsprechende Steuerbefehle an die Statoreinheit 2 bzw. das Bearbeitungselement 100 ausgegeben werden. In einem Ausführungsbeispiel können diese Steuerbefehle zur Bestromung der Spulengruppen 4 während der Drehbewegung anhand einer Regelung ausgegeben werden. Anhand der Regelung können ferner Drehmomente und/oder Drehimpulse während der wendelförmigen Bewegung berücksichtigt werden, wobei ein maximales Drehmoment bzw. ein maximaler Drehimpuls vorgegeben sind. Optional kann dabei vorgesehen sein, dass eine Drehung des Läufers 10 gestoppt wird bei Erreichen des maximalen Drehmoments. Dies ermöglicht insbesondere, den Deckel 22 mit einem vorgegebenen Drehmoment auf die Dose 21 zu schrauben bzw. die Schraube 31 mit einem vorgegebenen Drehmoment in das weitere Objekt 32 zu schrauben.

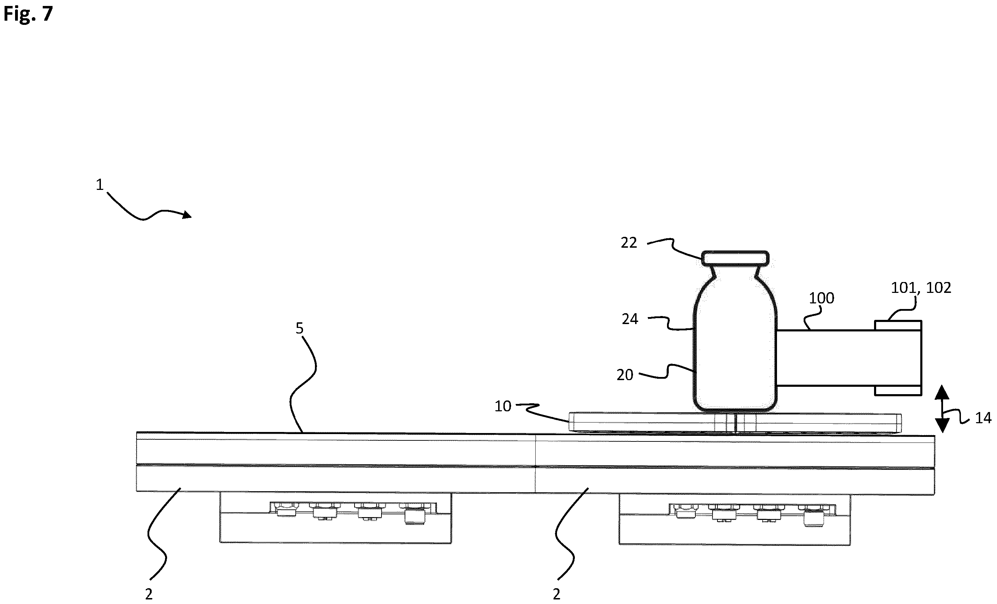

Figur 7 zeigt eine Seitenansicht eines weiteren Planarantriebssystems 1, bei dem das Bearbeitungselement 100 ein Etikettierelement 101 umfasst. Das Objekt 20 umfasst eine Flasche 24 mit einem Deckel 22. Der Deckel 22 kann dabei analog zu dem in den Figuren 2 bis 5 erläuterten Verfahren auf die Flasche 24 geschraubt worden sein. Das Etikettierelement 101 dient zum Anbringen eines Etiketts auf der Flasche 24, bzw. dem Objekt 20. Dabei kann vorgesehen sein, dass ein Etikett vom Etikettierelement 101 auf die Flasche 24 übertragen wird und dabei die Flasche 24 zusammen mit dem Läufer 10 einmal vollständig rotiert wird. Während der Rotation des Läufers 10 findet eine Bearbeitung des Objekts 20 durch das Etikettierelement 101, also durch das Bearbeitungselement 100, statt, indem ein Etikett auf die Flasche 24 übertragen wird.

Alternativ zum in Figur 7 gezeigten Verfahren kann ebenfalls vorgesehen sein, dass mittels des Etikettierelements 101 ein Etikett auf eine Dose 21 übertragen wird, wobei die Dose analog der Figuren 2 bis 5 ausgestaltet sein kann. Ferner kann die Dose 21 auch keinen Schraubverschluss, sondern einen alternativen Dosenverschluss umfassen und trotzdem mittels des Etikettierelements 21 etikettiert werden. Gleiches gilt prinzipiell auch für die Flasche 24, die beispielsweise nicht mit einem Deckel 22, der verschraubt werden kann, ausgestaltet sein kann, sondern ebenfalls einen Deckel 22 in Form eines Kronkorkens oder einen anderen Verschluss aufweisen kann.

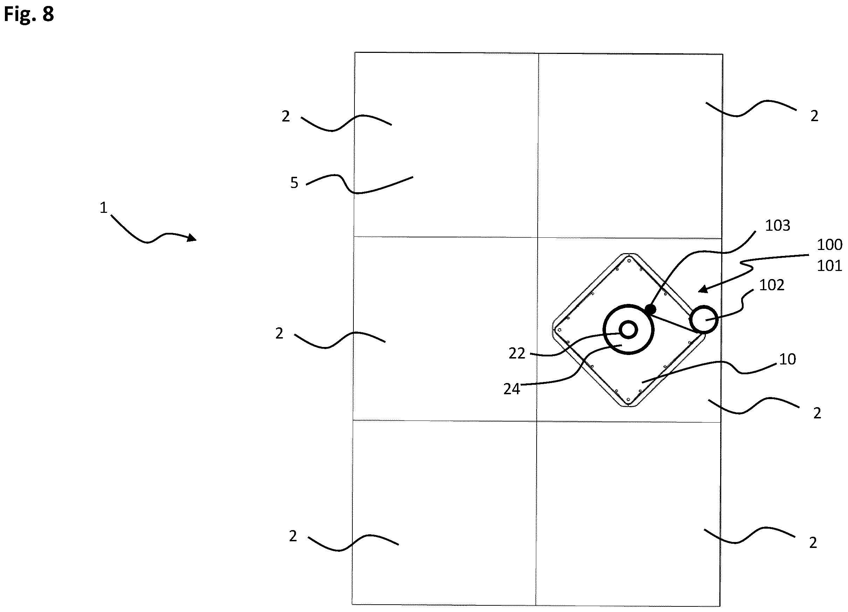

Figur 8 zeigt eine Draufsicht auf das Planarantriebssystem 1 der Figur 7. Das Bearbeitungselement 100, also das Etikettierelement 101 umfasst einen Etikettrollenhalter 102 und eine Abrollvorrichtung 103. Ein Etikett wird von der Etikettierrolle 102 auf das sich auf den drehenden Läufer 10 angeordnete Objekt, also der Flasche 24, übertragen. Dies kann beispielsweise dadurch erfolgen, dass die Abrollvorrichtung 103 das Etikett auf die Flasche 24 drückt und es dadurch vom Etikettrollenhalter 102 auf die Flasche 24 übertragen wird.

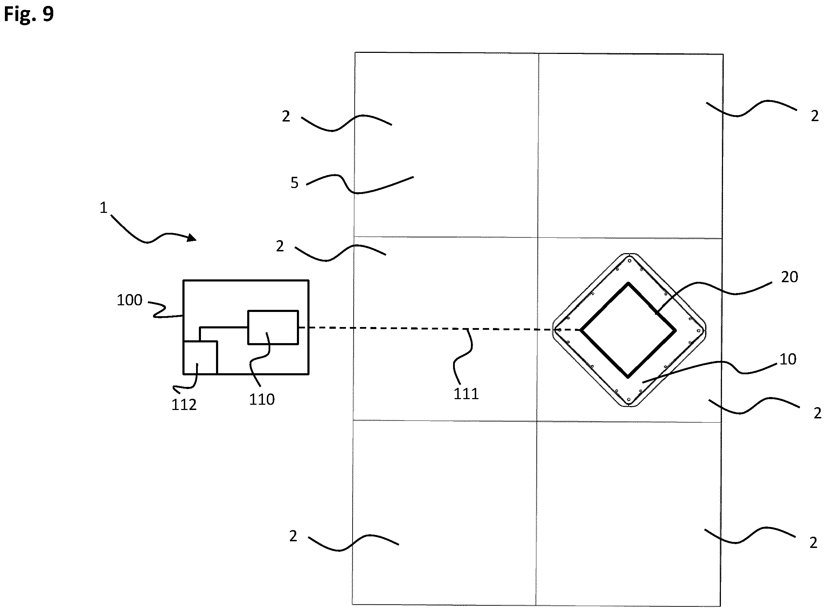

Figur 9 zeigt eine Draufsicht auf ein weiteres Planarantriebssystems 1. In diesem Ausführungsbeispiel umfasst das Bearbeitungselement 100 einen Laser 110. Der Laser 110 kann eine Oberfläche des Objekts 20 bestrahlen und dabei verändern. Eine Laserstrahlung 111 geht also vom Laser 110 aus und trifft auf das Objekt 20. Die Laserstrahlung 111 kann beispielsweise zum Lasergravieren oder Laserbeschriften des Objekts 20 eingerichtet sein. Das Bearbeitungselement 100 umfasst ferner eine optionale Lasersteuerung 112, mit der der Laser 110 aktiviert und deaktiviert werden kann.

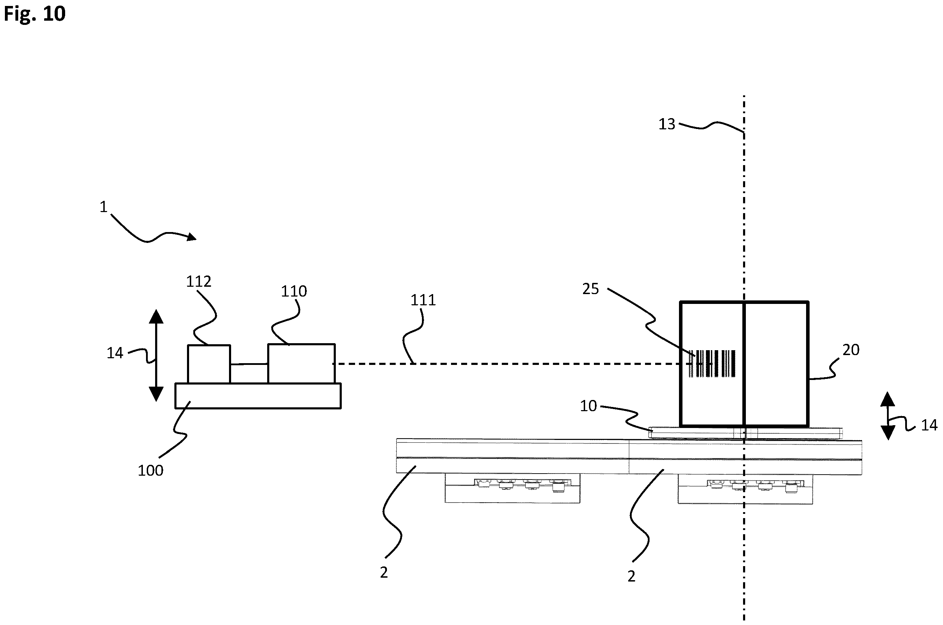

Figur 10 zeigt eine Seitenansicht des Planarantriebssystems 1 der Figur 9. Dabei ist dargestellt, dass das Bearbeitungselement 100 und/oder der Läufer 10 entlang einer Bewegungsrichtung 14 parallel zur Drehachse 13 bewegt werden kann. Ferner kann vorgesehen sein, dass der Läufer 10 verkippt wird, so dass die Drehachse 13 nicht mehr senkrecht zur Statorfläche 5 steht. Mittels der Laserstrahlung 111 wird dabei ein Barcode 25 auf dem Objekt 20 erzeugt. Das Objekt 20 ist in diesem Fall nicht als rund dargestellt, wie in den vorherigen Ausführungsbeispielen. Die entsprechende Erstellung des Barcodes kann also auch für nicht runde Objekte 20 erfolgen. Für jede Linie des Barcodes 25 wird dabei der Läufer 10 und/oder das Bearbeitungselement 100 parallel zur Drehachse 13 bewegt und nach Fertigstellung jeder Linie des Barcodes 25 wird das Objekt 20 weitergedreht. Alternativ kann auch vorgesehen sein, dass Objekt einmal vollständig rotiert wird und dabei der Laser 110 mittels der Lasersteuerung 112 an- und ausgeschaltet wird und dabei jeweils eine Zeile des Barcodes erstellt wird. Dies entspricht einem Ausführungsbeispiel, bei dem die Lasersteuerung 112 des Lasers 110 eingerichtet ist, den Laser 110 zu aktivieren und zu deaktivieren, wobei anhand einer durch die Rotation des Läufers 10 und einer Bewegung des Lasers entlang der Drehachse 13 und einer Bildinformation eine Aktivierungsabfolge bestimmt und der Laser 110 anhand der Aktivierungsabfolge aktiviert und deaktiviert wird. Dies ermöglicht ein effizientes Verfahren zum Laserbeschriften bzw. Lasergravieren des Objekts 20.

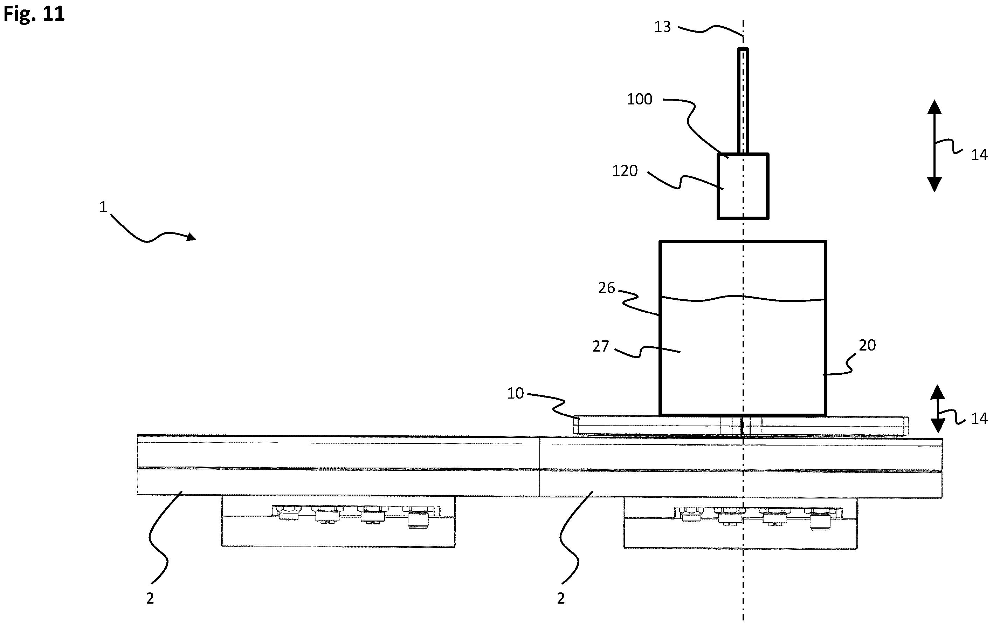

Figur 11 zeigt eine Seitenansicht eines weiteren Planarantriebssystems 1 zur Bearbeitung eines Objekts 20. Das Objekt 20 umfasst in diesem Ausführungsbeispiel ein Gefäß 26 mit einer Flüssigkeit 27. Das Bearbeitungselement 100 umfasst einen senkrecht zur Drehachse 13 unbeweglichen Rührspatel 120, der direkt über der Rotationsposition 7 angeordnet ist. Parallel zur Drehachse 13 kann der Rührspatel 120 entlang der Bewegungsrichtung 14 bewegt und in die Flüssigkeit 27 getaucht werden. Figur 11 zeigt dabei den Rührspatel 120 oberhalb des Gefäßes 26. Der Läufer 10 ist dabei bereits in die Rotationsposition 7 bewegt, jedoch noch nicht rotiert worden.

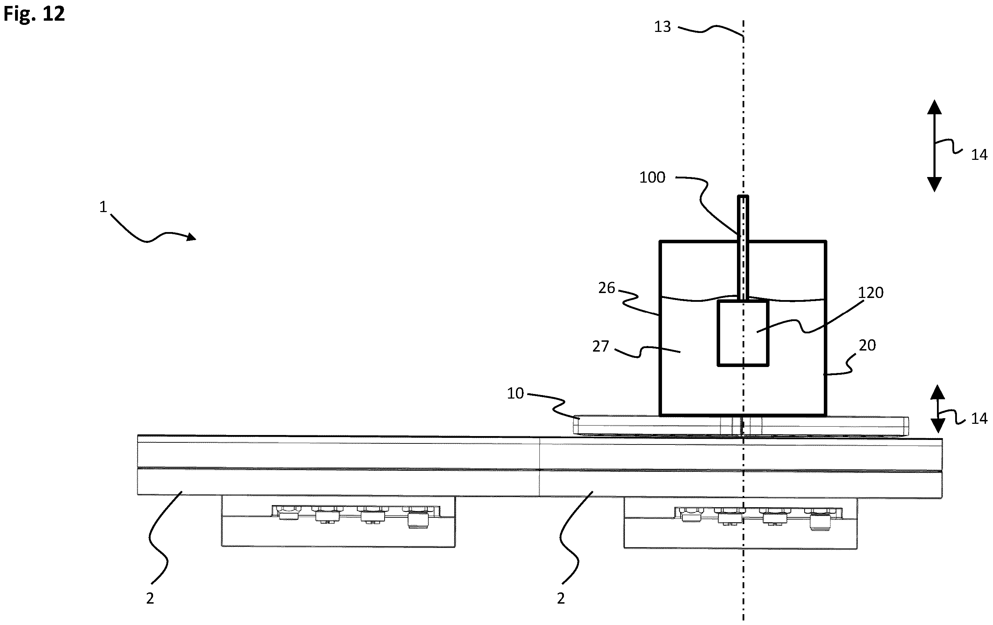

Figur 12 zeigt eine Seitenansicht des Planarantriebssystems 1 der Figur 11, nach dem der Rührspatel 120 in die Flüssigkeit 27 getaucht und eine Rotation des Läufers 10 gestartet wurde. Durch die Position des Rührspates 120 in der Flüssigkeit 27 kann mittels der Läuferrotation eine Bearbeitung der Flüssigkeit 27 erfolgen, indem die Flüssigkeit 27 mithilfe des Rührspatels 120 umgerührt wird.

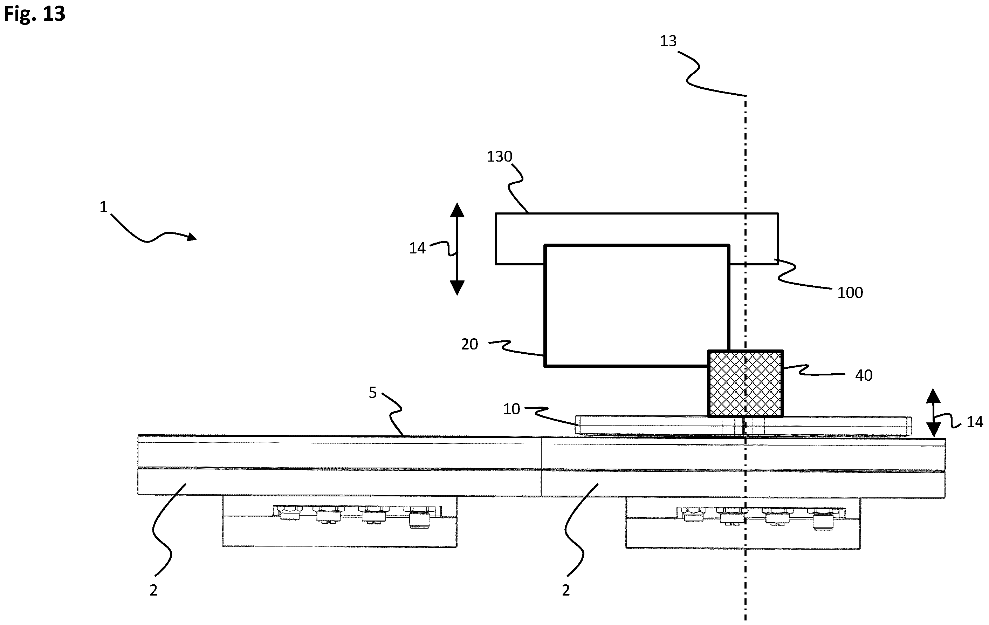

Fig. 13 zeigt eine Seitenansicht eines weiteren Planarantriebssystems 1 zur Bearbeitung eines Objekts 20. Ein Fräskopf 40 ist auf dem Läufer 10 angeordnet. Das Bearbeitungselement 100 hält mittels eines Objekthalters 130 das Objekt 20 fest. Der Läufer 10 kann wie bereits beschrieben in einer Rotationsposition 7 um die Drehachse 13 rotiert werden. Dadurch rotiert auch der Fräskopf 40, wobei mittels des Fräskopfs 40 ein Fräsen des Objekts 20 möglich ist. Dabei kann eine Rotationsgeschwindigkeit des Läufers 10 kontrolliert werden. Das Bearbeitungselement 100 kann parallel und senkrecht zur Statorfläche 5 bewegt werden, wodurch verschiedene Fräsmuster erzeugbar sind.

Ferner kann der Läufer 10 auch aus der senkrechten verkippt werden, so dass die Drehachse 13 nicht mehr senkrecht zur Statorfläche 5 steht. Dies ermöglicht Fräsmuster mit schrägen Fräskanten.

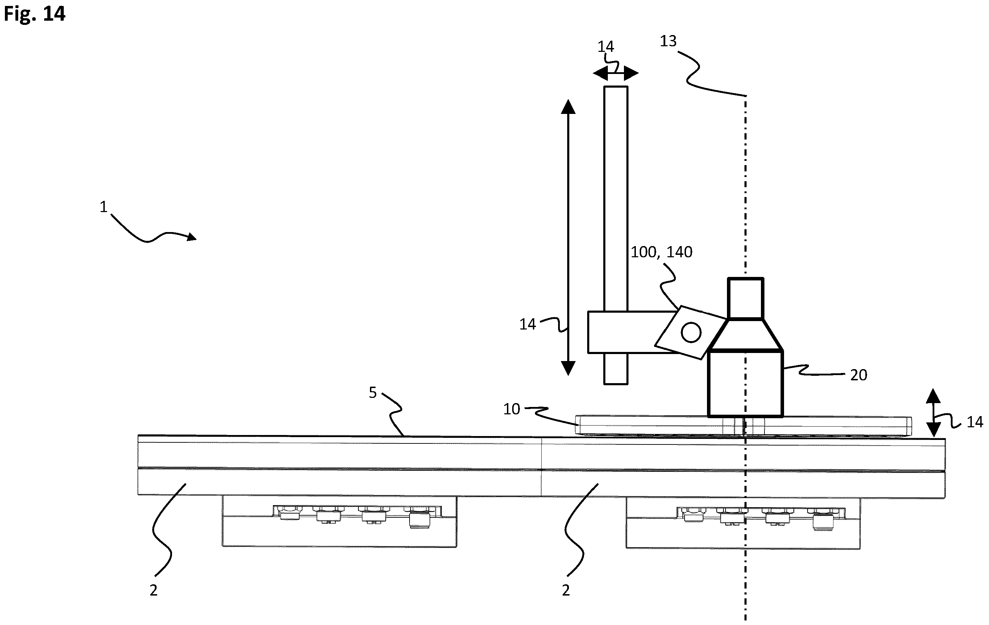

Fig. 14 zeigt eine Seitenansicht eines weiteren Planarantriebssystems 1 zur Bearbeitung eines Objekts 20. Das Objekt 20 ist auf dem Läufer 10 angeordnet. Ein Bearbeitungselement 100 ist als zerspanendes Werkzeug 140, beispielsweise als Drehmeißel, ausgestaltet. Das zerspanende Werkzeug 140 kann parallel und senkrecht zur Statorfläche 5 bewegt werden. Durch eine Rotation des Läufers 10 kann das Objekt 20 wie auf einer Drehbank bearbeitet werden, wenn das zerspanende Werkzeug 140 in Kontakt mit dem Objekt 20 gebracht wird.

## Patentansprüche

1. Verfahren zum Bearbeiten eines Objekts (20) mittels eines Planarantriebssystems (1),
wobei das Planarantriebssystem (1) vier Statoreinheiten (3) mit jeweils einer Mehrzahl von Spulengruppen (4) zum Erzeugen eines Statormagnetfelds, eine Statorfläche (5) oberhalb der vier Statoreinheiten (3), sowie zumindest einen Läufer (10) mit vier Magneteinheiten (11) zum Erzeugen eines Läufermagnetfelds aufweist,
wobei ein Berührungspunkt der vier Statoreinheiten (3) vorliegt, wobei die Spulengruppen (4) der Statoreinheit (3) rechteckige und längsgestreckte Spulen aufweisen, die sich parallel zu einer Kanten der Statoreinheit (3) erstrecken,
wobei die vier Magneteinheiten (11) des Läufers (10) parallel zu den Läuferaußenkanten (12) an den Läuferaußenkanten (12) umlaufend angeordnet sind,
wobei oberhalb der Statorfläche (5) ein Bearbeitungselement (100) angeordnet ist, wobei das Planarantriebssystem (1) zumindest eine Rotationsposition (7) aufweist, wobei in der Rotationsposition (7) ein im Mittelpunkt des Läufers (10) angeordnetes Symmetriezentrum des Läufers oberhalb des Berührungspunktes der vier Statoreinheiten angeordnet ist, um eine freie Drehung des Läufers (10) zu ermöglichen, wobei der Läufer (10) in der Rotationsposition (7) um eine Drehachse (13) senkrecht zur Statorfläche (5) rotiert werden kann, wobei eine räumliche Anordnung des Bearbeitungselements (100) durch die Rotationsposition (7) vorgegeben ist, mit den folgenden Schritten:
- Bestromen der Spulengruppen (4) derart, dass sich der Läufer (10) mit dem auf dem Läufer (10) angeordneten Objekt (20) in die Rotationsposition (7) bewegt;
- Bestromen der Spulengruppen (4) derart, dass der Läufer (20) rotiert;
- Bearbeiten des Objekts (20) mittels der Läuferrotation, wobei das Bearbeitungselement (100) auf das Objekt (20) einwirkt, wobei das Bearbeitungselement (100) und der Läufer (10) während der Läuferrotation parallel zur Drehachse (13) relativ zueinander bewegt werden, wobei der Läufer (10) derart rotiert und das Bewegen des Bearbeitungselements (100) und des Läufers (10) parallel zur Drehachse (13) relativ zueinander derart ausgeführt werden, dass sich für das auf dem Läufer (10) angeordnete Objekt (20) und das Bearbeitungselement (100) eine erste Bewegung und eine zweite Bewegung relativ zueinander überlagern, **dadurch gekennzeichnet, dass** Steuerbefehle zur Bestromung der Spulengruppen (4) während der Drehbewegung anhand einer Regelung ausgegeben werden, wobei anhand der Regelung ferner Drehmomente und/oder Drehimpulse während der überlagerten ersten Bewegung und zweiten Bewegung berücksichtigt werden, wobei ein maximales Drehmoment beziehungsweise ein maximaler Drehimpuls vorgegeben sind, und wobei das Drehmoment und/oder der Drehimpuls anhand der zur Bestromung der Spulengruppen vorgegebenen Steuerbefehle und anhand von Istströmen innerhalb der Spulengruppen ermittelt werden.

2. Verfahren nach Anspruch 1, wobei das Bearbeitungselement (100) einen Deckel (22) für das Objekt (20) hält, und wobei durch die überlagerte erste Bewegung und zweite Bewegung eine Verschraubung des Deckels (22) mit dem Objekt (20) erfolgt.

3. Verfahren nach Anspruch 1 oder 2, wobei das Bearbeitungselement (100) derart angeordnet ist, dass ein Mittelpunkt des Deckels (22) oberhalb der Rotationsposition (7) angeordnet ist.

4. Verfahren nach einem der voranstehenden Ansprüche, wobei der Läufer (10) rotiert und sich das Bearbeitungselement (100) auf den Läufer (10) zubewegt.

5. Verfahren nach einem der voranstehenden Ansprüche, wobei der Läufer (10) einen Schraubenhalter (30) aufweist, wobei das Objekt (20) eine Schraube (31) ist, wobei der Schraubenhalter (30) die Schraube (31) hält und in ein vom Bearbeitungselement (100) gehaltenes weiteres Objekt (32) mittels der überlagerten ersten Bewegung und zweiten Bewegung eindreht.

6. Verfahren nach Anspruch 5, wobei der Läufer (10) während der Drehbewegung entlang der Drehachse (13) von der Statorfläche (5) weg bewegt wird, wobei eine Entfernungsänderung des Läufers (10) pro Umdrehung von einer Ganghöhe der Schraube (31) abhängt.

7. Verfahren nach einem der voranstehenden Ansprüche, wobei eine Drehung des Läufers (10) gestoppt wird bei Erreichen des maximalen Drehmoments.

8. Verfahren nach Anspruch 1, wobei das Bearbeitungselement (100) ein Etikettierelement (101) umfasst, wobei das Etikettierelement (101) einen Etikettrollenhalter (102) aufweist, wobei das Etikettierelement (101) eine Abrollvorrichtung (102) umfasst, an der ein Etikett vom Etikettierrollenhalter (101) auf das sich auf dem drehenden Läufer (10) angeordnete Objekt (20) übertragen wird.

9. Verfahren nach Anspruch 1, wobei das Bearbeitungselement (100) einen Laser (110) umfasst, wobei der Laser (110) eine Oberfläche des Objekts (20) bestrahlt und dabei verändert.

10. Verfahren nach Anspruch 9, wobei eine Lasersteuerung (112) des Lasers eingerichtet ist, den Laser (110) zu aktivieren und zu deaktivieren, wobei anhand einer durch die Rotation des Läufers (10) und einer Bewegung des Lasers (110) entlang der Drehachse (13) und einer Bildinformation eine Aktivierungsabfolge bestimmt und der Laser (110) anhand der Aktivierungsabfolge aktiviert und deaktiviert wird.

11. Verfahren nach Anspruch 9 oder 10, wobei der Laser (110) und der Läufer (10) parallel zur Drehachse (13) relativ zueinander bewegt werden.

12. Verfahren nach Anspruch 1, wobei das Bearbeitungselement (100) einen senkrecht zur Drehachse (13) unbeweglichen Rührspatel (120) umfasst, wobei der Rührspatel (120) direkt über der Rotationsposition (7) angeordnet ist, wobei das Objekt (20) ein Gefäß (26) mit einer Flüssigkeit (27) umfasst, wobei vor der Läuferrotation der Rührspatel (120) parallel zur Drehachse (13) bewegt und in die Flüssigkeit (27) getaucht wird.

13. Planarantriebssystem (1), aufweisend zumindest eine Statoreinheit (3) mit jeweils einer Mehrzahl von Spulengruppen (4) zum Erzeugen eines Statormagnetfelds und einer Statorfläche (5), ferner aufweisend zumindest einen Läufer (10) mit einer Mehrzahl von Magneteinheiten (11) zum Erzeugen eines Läufermagnetfelds, wobei über eine magnetische Kopplung zwischen dem Statormagnetfeld und dem Läufermagnetfeld der Läufer oberhalb der Statorfläche antreibbar ist, wobei das Planarantriebssystem (1) ferner eine Steuereinheit (8) und ein Bearbeitungselement (100) aufweist, wobei die Steuereinheit (8) eine Recheneinheit umfasst und eingerichtet ist, Steuersignale auszugeben, wobei die Steuersignale Bestromungsinformationen für Spulengruppen (4) einer Statoreinheit (3) umfassen, wobei die Spulengruppen (4) anhand der Steuersignale derart bestromt werden, dass das Verfahren nach einem der Ansprüche 1 bis 12 ausgeführt wird.

## Claims

1. A method for processing an object (20) with the aid of a planar drive system (1),
the planar drive system (1) four stator assemblies (3) having in each case a plurality of coil groups (4) for generating a stator magnetic field, a stator surface (5) above the four stator assemblies (3), and at least one rotor (10) having four magnet units (11) for generating a rotor magnetic field,
wherein a point of contact of the four stator assemblies (3) is provided, wherein the coil groups (4) of the stator assembly (3) comprise rectangular and longitudinally extended coils extending in parallel to an edge of the stator assembly (3),
wherein the four magnet units (11) of the rotor (10) are arranged in parallel to the outer edges (12) of the rotor at the outer edges (12) of the rotor in a circumferential manner,
wherein a processing element (100) is arranged above the stator surface (5), wherein the planar drive system (1) comprises at least one rotational position (7), wherein in the rotational position (7), a symmetric center of the rotor arranged at the center point of the rotor (10) is arranged above the point of contact of the four stator assemblies in order to allow for a free rotation of the rotor (10),
wherein the rotor (10) may be rotated in the rotational position (7) about an axis of rotation (13) perpendicular to the stator surface (5), wherein a spatial arrangement of the processing element (100) is predetermined by the rotational position (7), comprising the following steps:
- energizing the coil groups (4) in such a way that the rotor (10) with the object (20) arranged on the rotor (10) moves into the rotational position (7);
- energizing the coil groups (4) in such a way that the rotor (20) rotates;
- processing the object (20) with the aid of the rotor rotation, wherein the processing element (100) acts upon the object (20), wherein during rotor rotation the processing element (100) and the rotor (10) are moved relative to each other in parallel to the axis of rotation (13), wherein the rotor (10) is rotated and the movement of the processing element (100) and the rotor (10) in parallel to the axis of rotation (13) relative to each other is carried out in such a way that a first movement and a second movement relative to each other are superimposed for the object (20) disposed on the rotor (10) and the processing element (100), **characterized in that** control commands for energizing the coil groups (4) during the rotational movement are output on the basis of a closed-loop control, and wherein, on the basis of the closed-loop control, torques and/or angular momentums are furthermore taken into account during the superimposed first motion and second motion, wherein a maximum torque or a maximum angular momentum are predetermined, and wherein the torque and/or the angular momentum are determined on the basis of the control commands provided for energizing the coil groups and on the basis of actual currents within the coil groups.

2. The method according to claim 1, wherein the processing element (100) holds a cover (22) for the object (20), and wherein the superimposed first movement and second movement cause the cover (22) to be screwed to the object (20).

3. The method according to claim 1 or 2, wherein the processing element (100) is arranged in such a way that a center of the cover (22) is arranged above the rotational position (7).

4. The method according to any one of the preceding claims, wherein the rotor (10) rotates and the processing element (100) moves towards the rotor (10).

5. The method according to any one of the preceding claims, wherein the rotor (10) comprises a screw holder (30), the object (20) being a screw (31), the screw holder (30) holding the screw (31) and screwing it into a further object (32) held by the processing element (100) with the aid of the superimposed first movement and second movement.

6. The method according to claim 5, wherein the rotor (10) is moved away from the stator surface (5) during the rotational movement along the rotational axis (13), wherein a change in distance of the rotor (10) per rotation depends on a pitch of the screw (31).

7. The method according to any one of the preceding claims, wherein a rotation of the rotor (10) is stopped upon reaching the maximum torque.

8. The method according to claim 1, wherein the processing element (100) comprises a labeling element (101), wherein the labeling element (101) comprises a label roll holder (102), wherein the labeling element (101) comprises an unwinding device (102) at which a label is transferred from the label roll holder (101) to the object (20) arranged on the rotating rotor (10).

9. The method according to claim 1, wherein the processing element (100) comprises a laser (110), wherein the laser (110) irradiates and thereby alters a surface of the object (20).

10. The method according to claim 9, wherein a laser controller (112) of the laser is arranged to activate and deactivate the laser (110), wherein an activation sequence is determined based on information provided by the rotation of the rotor (10) and a movement of the laser (110) along the rotational axis (13) and image information, and the laser (110) is activated and deactivated based on the activation sequence.

11. The method according to claim 9 or 10, wherein the laser (110) and the rotor (10) are moved relative to each other in parallel to the axis of rotation (13).

12. The method according to claim 1, wherein the processing element (100) comprises a stirring spatula (120) immovable perpendicular to the rotational axis (13), the stirring spatula (120) being arranged directly above the rotational position (7), wherein the object (20) comprises a vessel (26) with a liquid (27), wherein prior to the rotor rotation the stirring spatula (120) is moved in parallel to the rotational axis (13) and immersed in the liquid (27).

13. A planar drive system (1), comprising at least one stator assembly (3) each having a plurality of coil groups (4) for generating a stator magnetic field and a stator surface (5), further comprising at least one rotor (10) having a plurality of magnet units (11) for generating a rotor magnetic field, wherein the rotor may be driven above the stator surface via a magnetic coupling between the stator magnetic field and the rotor magnetic field, wherein the planar drive system (1) further comprises a controller (8) and a processing element (100), wherein the controller (8) comprises a computing unit and is configured to output control signals, wherein the control signals comprise energizing information for coil groups (4) of a stator assembly (3), wherein the coil groups (4) are energized in such a way on the basis of the control signals that the method according to any one of claims 1 to 4 is carried out.

## Revendications

1. Procédé de traitement d'un objet (20) au moyen d'un système d'entraînement planaire (1),
le système d'entraînement planaire (1) comprenant quatre unités stator (3) ayant chacune une pluralité de groupes de bobines (4) pour générer un champ magnétique statorique, une surface de stator (5) au-dessus des quatre unités stator (3), et au moins un rotor (10) ayant quatre unités d'aimants (11) pour générer un champ magnétique rotorique,
un point de contact des quatre unités stator (3) étant présent, les groupes de bobines (4) de l'unité stator (3) comprenant des bobines rectangulaires et allongées qui s'étendent parallèlement à un bord de l'unité stator (3), les quatre unités magnétiques (11) du rotor (10) étant agencées parallèlement aux bords extérieurs (12) du rotor, en faisant le tour des bords extérieurs (12) du rotor,
un élément de traitement (100) étant agencé au-dessus de la surface du stator (5),
le système d'entraînement planaire (1) présentant au moins une position de rotation (7), un centre de symétrie du rotor agencé au centre du rotor (10) étant, dans la position de rotation (7), agencé au-dessus du point de contact des quatre unités stator afin de permettre une rotation libre du rotor (10),
le rotor (10) étant apte à être mis en rotation dans la position de rotation (7) autour d'un axe de rotation (13) perpendiculaire à la surface du stator (5), une disposition spatiale de l'élément de traitement (100) étant prédéfinie par la position de rotation (7), le procédé ayant les étapes suivantes :
- alimentation électrique des groupes de bobines (4) de telle sorte que le rotor (10) se déplace avec l'objet (20) agencé sur le rotor (10) dans la position de rotation (7) ;
- alimentation électrique des groupes de bobines (4) de manière que le rotor (10) tourne ;
- traitement de l'objet (20) au moyen de la rotation du rotor, l'élément de traitement (100) agissant sur l'objet (20), l'élément de traitement (100) et le rotor (10) étant déplacés l'un par rapport à l'autre parallèlement à l'axe de rotation (13) pendant la rotation du rotor, le rotor (10) tournant de telle sorte que, et le déplacement de l'élément de traitement (100) et du rotor (10) parallèlement à l'axe de rotation (13) l'un par rapport à l'autre étant effectué de telle sorte que, pour l'objet (20) agencé sur le rotor (10) et l'élément de traitement (100), un premier mouvement et un deuxième mouvement se superposent l'un par rapport à l'autre, **caractérisé en ce que** des instructions de commande pour alimenter les groupes de bobines (4) pendant le mouvement de rotation sont émises au moyen d'une régulation, des couples de rotation et/ou des impulsions de rotation étant en outre pris en compte au moyen de la régulation pendant le premier mouvement et le deuxième mouvement superposés, un couple maximal, respectivement une impulsion de rotation maximale, étant prédéfinis, et le couple et/ou l'impulsion de rotation étant déterminés au moyen des instructions de commande prédéfinies pour alimenter les groupes de bobines et au moyen de courants réels à l'intérieur des groupes de bobines.

2. Procédé selon la revendication 1, dans lequel l'élément de traitement (100) maintient un couvercle (22) pour l'objet (20), et dans lequel un vissage du couvercle (22) avec l'objet (20) est effectué par le premier mouvement et le deuxième mouvement superposés.

3. Procédé selon la revendication 1 ou la revendication 2, dans lequel l'élément de traitement (100) est agencé de telle sorte qu'un centre du couvercle (22) est situé au-dessus de la position de rotation (7).

4. Procédé selon l'une des revendications précédentes, dans lequel le rotor (10) tourne et l'élément de traitement (100) se déplace vers le rotor (10).

5. Procédé selon l'une des revendications précédentes, dans lequel le rotor (10) comprend un support de vis (30), l'objet (20) étant une vis (31), le support de vis (30) maintenant la vis (31) et la vissant dans un autre objet (32) maintenu par l'élément de traitement (100) au moyen du premier mouvement et du deuxième mouvement superposés.

6. Procédé selon la revendication 5, dans lequel le rotor (10) est éloigné de la surface du stator (5) pendant le mouvement de rotation le long de l'axe de rotation (13), une variation de distance du rotor (10) par tour dépendant d'un pas de la vis (31).

7. Procédé selon l'une des revendications précédentes, dans lequel une rotation du rotor (10) est arrêtée lorsque le couple maximal est atteint.

8. Procédé selon la revendication 1, dans lequel l'élément de traitement (100) comprend un élément d'étiquetage (101), l'élément d'étiquetage (101) comprenant un support (102) de rouleau d'étiquettes, l'élément d'étiquetage (101) comprenant un dispositif de déroulement (102) sur lequel une étiquette est transférée du support (102) de rouleau d'étiquettes à l'objet (20) agencé sur le rotor (10) en rotation.

9. Procédé selon la revendication 1, dans lequel l'élément de traitement (100) comprend un laser (110), le laser (110) irradiant et modifiant ainsi une surface de l'objet (20) .

10. Procédé selon la revendication 9, dans lequel une commande laser (112) du laser est agencée pour activer et désactiver le laser (110), une séquence d'activation étant déterminée par la rotation du rotor (10) et par un mouvement du laser (110) le long de l'axe de rotation (13) et une information d'image, et le laser (110) étant activé et désactivé au moyen de la séquence d'activation.

11. Procédé selon la revendication 9 ou la revendication 10, dans lequel le laser (110) et le rotor (10) sont déplacés l'un par rapport à l'autre parallèlement à l'axe de rotation (13).

12. Procédé selon la revendication 1, dans lequel l'élément de traitement (100) comprend une spatule d'agitation (120) immobile perpendiculairement à l'axe de rotation (13), la spatule d'agitation (120) étant agencée directement au-dessus de la position de rotation (7), l'objet (20) comprenant un récipient (26) contenant un liquide (27), la spatule d'agitation (120) étant déplacée parallèlement à l'axe de rotation (13) et immergée dans le liquide (27) avant la rotation du rotor.

13. Système d'entraînement planaire (1), présentant au moins une unité stator (3) avec respectivement une pluralité de groupes de bobines (4) pour générer un champ magnétique statorique et une surface de stator (5), présentant en outre au moins un rotor (10) avec une pluralité d'unités d'aimants (11) pour générer un champ magnétique rotorique, le rotor étant apte à être entraîné au-dessus de la surface de stator par le biais d'une liaison magnétique entre le champ magnétique statorique et le champ magnétique rotorique, le système d'entraînement planaire (1) comprenant en outre une unité de commande (8) et un élément de traitement (100), l'unité de commande (8) comprenant une unité de calcul et étant agencée pour émettre des signaux de commande, les signaux de commande comprenant des informations d'alimentation pour des groupes de bobines (4) d'une unité stator (3), les groupes de bobines (4) étant alimentés en courant au moyen des signaux de commande de telle sorte que le procédé selon l'une quelconque des revendications 1 à 12 est mis en œuvre.
